(19) Europäisches Patentamt
European Patent Office
Office européen des brevets

(11) **EP 2 184 132 B1**

(12) **EUROPEAN PATENT SPECIFICATION**

(45) Date of publication and mention
of the grant of the patent:
**08.05.2013 Bulletin 2013/19**

(51) Int Cl.:
***B24B 13/00*** *(2006.01)*    ***B24B 13/005*** *(2006.01)*
***B24B 13/06*** *(2006.01)*

(21) Application number: **08305785.1**

(22) Date of filing: **07.11.2008**

(54) **A method of and an apparatus for manufacturing an optical lens**

Verfahren und Vorrichtung zur Herstellung einer optischen Linse

Procédé et appareil pour la fabrication d'une lentille optique

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**12.05.2010 Bulletin 2010/19**

(73) Proprietor: **Essilor International (Compagnie Générale d'Optique) 94220 Charenton-le-Pont (FR)**

(72) Inventor: **Martin, Guillaume 75020 Paris (FR)**

(74) Representative: **Cabinet Plasseraud 52, rue de la Victoire 75440 Paris Cedex 09 (FR)**

(56) References cited:
**EP-A- 0 444 902        WO-A-99/26759
WO-A-2007/012713    US-A- 6 012 965**

## Description

### FIELD OF THE INVENTION

The present invention relates to a method of manufacturing an optical lens. Particularly, but not exclusively, the invention relates to method of manufacturing an ophthalmic lens in which a relative rotation is provided between a lens member and a manufacturing tool. The invention further relates to an apparatus for manufacturing an optical lens.

### BACKGROUND OF THE INVENTION

Methods of manufacturing ophthalmic lens to provide a lens of a desired optical quality are well known. Typically, a polymeric article, conventionally known as a lens blank, is manufactured by casting or machining The lens blank has one surface having at least one refractive power. Another opposing surface of the lens blank is then manufactured to provide what is known as an "uncut lens", or to provide a semifinished lens, having at least one additional refractive power. Prior to manufacturing of the front surface, the diameter of the blank or uncut lens typically is reduced by cutting to a round shape by a cutting process known as cribbing. The diameter of the uncut lens may be further reduced after surface manufacturing to the final shape required for mounting in the spectacles of the wearer. US 6 012 965 discloses a prior art method of manufacturing ophthalmic lens.

Manufacturing of the surface of the lens includes surfacing operations of the optical surface. Such operations can include machining, chamfering, bevelling, polishing, or coating the surface of a lens member in order to modify the optical surface. In many manufacturing operations relative rotation a lens member about a fixed axis with respect to a manufacturing tool is provided.

Typically, during such operations an uncut lens is blocked in such a way that relative rotation is provided around an axis passing through the prism reference point (PRP) of the lens. The PRP corresponds to the point on the front surface of the lens stipulated by the manufacturer at which the prismatic effect of the finished lens is determined.

### SUMMARY OF THE INVENTION

Accordingly, it would be advantageous to provide a method of manufacturing a lens in which the quality of the lens can be improved.

To better address one or more of the foregoing concerns, in accordance with a first aspect of the invention there is provided a method of manufacturing an optical lens, in particular an ophthalmic lens, according to claim 1.

In the context of the present invention the term "lens member" can refer to a lens blank, an uncut lens, a semi-finished lens or a finished optical lens. It will be understood that the method can thus be applied to any stage of the manufacturing process of an ophthalmic lens.

Since the manufacturing axis of rotation passes through the region of the geometrical barycentre of the first surface of the lens member, surfacing operations of this surface are improved. In particular, the distance from the manufacturing rotation axis to the farthest edge of the lens member is reduced. The overall area covered by the machining tool is thus reduced and the operating time of the tool is thereby reduced leading to less wearing of the tool. These can therefore lead to the tool having to be replaced less often and thus a reduction in manufacturing costs. Moreover, during the polishing operation a more uniform polishing is obtained over the lens surface leading to a better quality in terms of function and aesthetics.

In some embodiments of the invention, the method may include a step of polishing the first surface of the lens member with a polishing tool the operating parameters of the polishing tool being determined as a function of the manufacturing axis of rotation. The sweep amplitude of the polishing tool may also be determined according to the manufacturing axis of rotation. Accordingly, the polishing operation may be optimised, leading to production of a better quality lens.

According to the invention the edge contour is defined by a plurality of points, each of the plurality of points being selected according to a desired minimum edge thickness of the lens member. This leads to the production of a lens least prone to cracking or chipping during subsequent manipulation and operation of the lens.

In some embodiments the lens member is arranged such that a plane tangential to the first surface of the lens member is orientated perpendicularly to the manufacturing axis of rotation, the plane being tangential to the first surface at the point of intersection of the manufacturing axis of rotation and the first surface.

In a particular embodiment, the optical surface of the first surface of the lens member and the optical surface of a second opposing surface of the lens member are orientated with respect to the machining axis of rotation such that the desired optical properties of the lens member are respected.

According to a further aspect of the invention, there is provided a lens manufacture apparatus for manufacturing an optical lens, in particular an ophthalmic lens. according to claim 7.

The processor is configured to define the region of the geometrical barycentre as a circular region centered on the geometrical barycentre point and having a diameter of up to 6 mm

The apparatus may include a polishing tool for polishing the first surface of the lens member. The polishing tool can be arranged to determine the operating parameters of the polishing tool according to the manufacturing axis of rotation. The polishing tool may be configured to determine the sweep amplitude of the polishing tool as a function of the manufacturing axis of rotation.

The processor is configured to define the edge contour by a plurality of points, each of the plurality of points being selected according to a desired minimum edge thickness of the lens member.

The method according to the invention may be computer implemented. The method may be implemented in software on a programmable apparatus. It may also be implemented solely in hardware or in software, or in a combination thereof.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

**BRIEF DESCRIPTION OF THE DRAWINGS**

Embodiments of the invention will now be described, by way of example only, and with reference to the following drawings in which:-

Figure 1 is a schematic view of an apparatus for manufacturing a lens according to a first embodiment of the invention;

Figure 2 is an example of a lens member indicating the minimum thickness for determining an edge contour according to a step of the method of the first embodiment of the invention;

Figure 3 is a flowchart outlining the steps of a method of manufacturing a lens according to a first embodiment of the invention;

Figures 4A to 4C illustrate how a geometrical barycentre region is determined according to the method of the first embodiment of the invention;

Figure 5 is a schematic illustration of the step of adjusting the lens member for the manufacturing process according to the first embodiment of the invention;

Figure 6A is a schematic illustration of the step of machining the lens member according to the first embodiment of the invention;

Figure 6B is a schematic illustration of the step of machining the lens member in which the machining axis of rotation corresponds to the prism reference point (PRP);

Figure 7A is a schematic illustration of the step of polishing the lens member according to the first embodiment of the invention; and

Figure 7B is a schematic illustration of the step of machining the lens member in which the machining axis of rotation corresponds to the prism reference point (PRP).

**DETAILED DESCRIPTION**

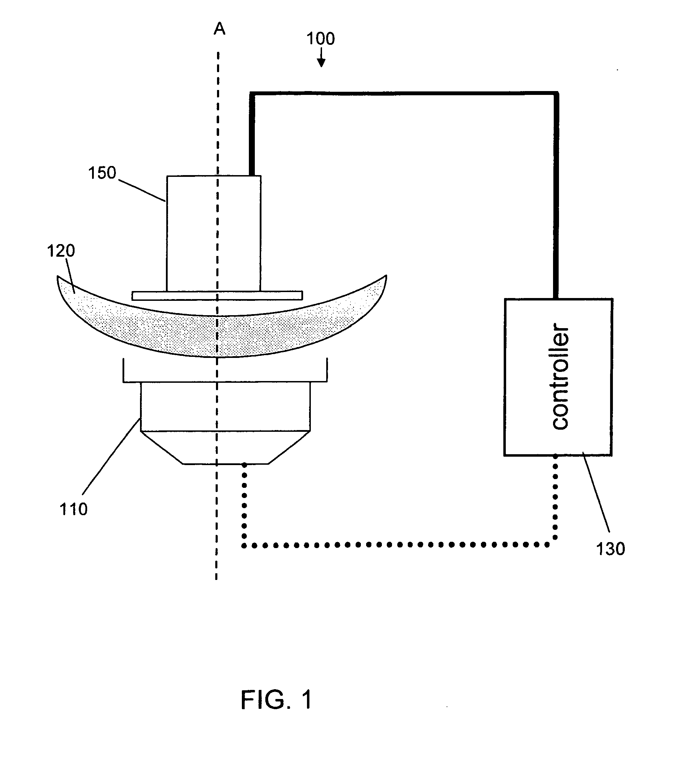

With reference to Figure 1, a lens manufacture apparatus for manufacturing an ophthalmic lens, according to a first embodiment of the invention, comprises a blocking device 110 for blocking a lens member 120 during manufacturing operations of a surface of the lens member 120. The blocking device is for fixing the lens member 120 in place with the desired orientation and inclination, and at a desired position during manufacturing operations of the surface of the lens member 120. The blocking device 110 is adapted to be driven in rotation about a rotation axis and may also be mobile in translation along a longitudinal and/or lateral axis. The blocking device 110 is also configured to be inclinable relative to its longitudinal axis.

In this embodiment of the invention a controller 130 is in communication with a manufacturing tool 150 so that movement of the manufacturing tool may be controlled by the processor 130. In embodiments of the invention the controller 130 may also be in communication with the blocking device 110 to control the blocking device 110 so that the lens member 120 can be positioned and orientated as required. Alternatively the blocking device may be manually controlled or controlled by other means to the desired position and/or orientation.

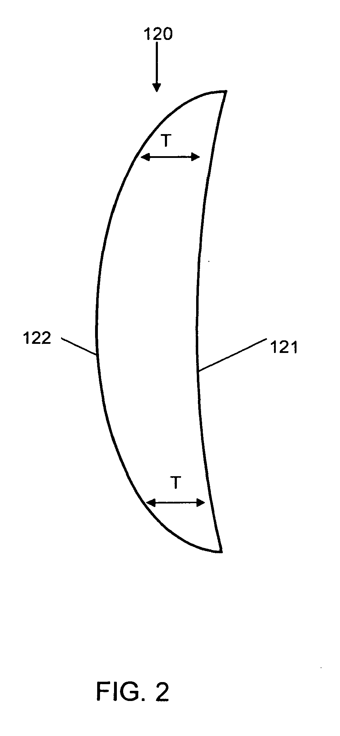

With reference to Figure 2, the lens member 120 has a front surface 121 that, in use of the resulting finished lens, is disposed nearest the object being viewed and a back surface 122 which is the surface placed nearest to the eye of the wearer. The lens member 120 may be a lens blank typically preformed and from which a finished lens is manufactured A lens blank may be semi-finished i.e. it may have one surface having at least one refractive power.

In this embodiment of the invention the lens member 120 undergoing the surface manufacturing process is constituted of a lens blank with a preformed rear surface 122, the front face 121 being modified by the manufacturing process to the required optical prescription. It will be understood, that in alternative embodiments of the invention both or either surfaces of the lens may be formed by the process of the invention. Although the optical surface 122 to be manufactured is represented in Figure 2 as concave, it will be appreciated that the optical surface 122 could equally well be convex or any other curved surface

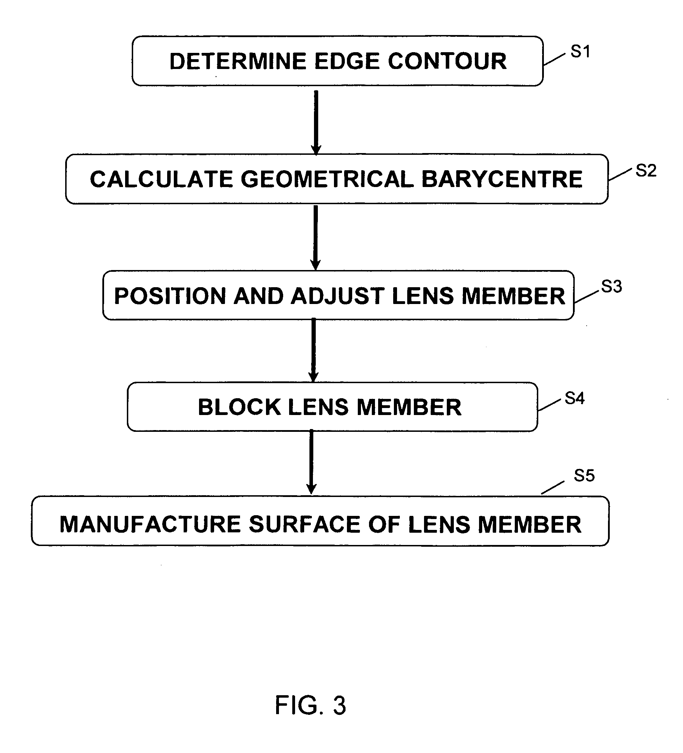

A method of manufacturing the surface of the lens member 120 according to the first embodiment of the invention will be described with reference to Figure 3. In a first step S1 of the procedure edge contour data defining the peripheral boundary of the lens member is determined. In this embodiment,the edge contour is defined by a plurality of points defining a peripheral boundary corresponding to a desired minimum edge thickness. An example of such a method is described in European patent EP1855838 . The minimum edge thickness corresponds to the desired minimum edge thickness for the uncut lens to be produced from the lens blank and is defined as the distance T between the front surface 121 and the rear surface 122 at the lens perimeter or the furthest point from the geometrical centre of the lens member at any given angular position. The desired edge thickness can be determined based on a consideration of the minimum edge thickness for which there will be no cracks or chips during the manufacturing process, that will facilitate handling of the lens member, by for example an optician, or a lens thickness that will alleviate the formation of coating defects. Preferably, the edge thickness will be in the range from about 0.1 mm to 2mm.

It will be appreciated that this method of providing edge contour data is given by way of non-limiting example only, and in that alternative embodiments of the invention, other methods of providing edge contour data may be applied. For example, the edge contour data may be determined by taking into account other physical or functional factors or constraints.

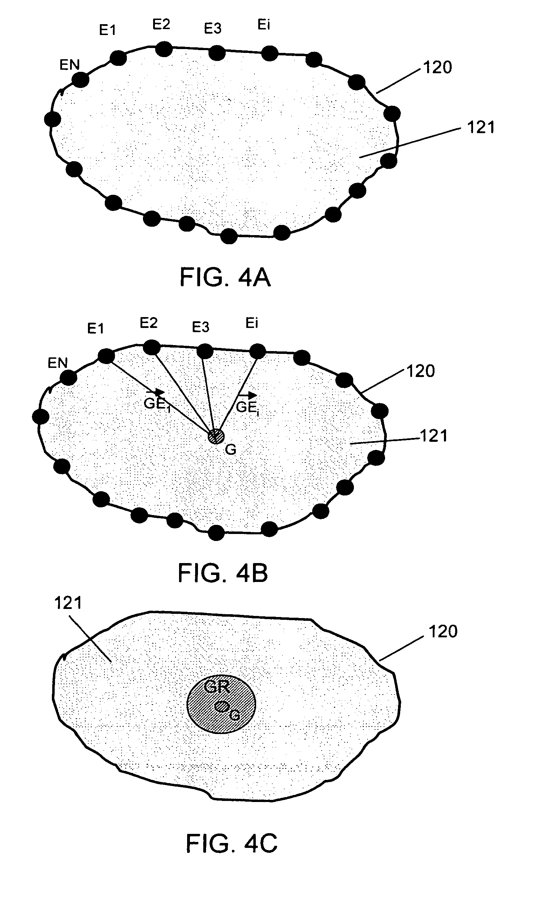

With reference to Figure 4A the edge contour is defined by a plurality of N points E1, E2... EN on the peripheral boundary of the first surface 121 of the lens member 120. Any number of points sufficient to define the edge contour may be selected, for example, in an embodiment 36 equally spaced points may be selected to provide suitable edge contour data.

With reference to Figure 4B, during a step S2 of the method according to the first embodiment, a geometrical barycentre G of the first surface 121 is calculated according to the edge contour data E1..EN according to the expression:

$$\sum_{i=1}^{N} \overrightarrow{GE_i} = \vec{0}$$

where $E_i$ represents the co-ordinates of each point defining the edge contour of the lens member, N the number of edge contour data points and $G$ represents the co-ordinates of the geometrical barycentre point.

Referring to Figure 4C, a circular region centered on the geometrical barycentre point G having a diameter of up to 6mm, for example 3mm defines the geometrical barycentre point region GR.

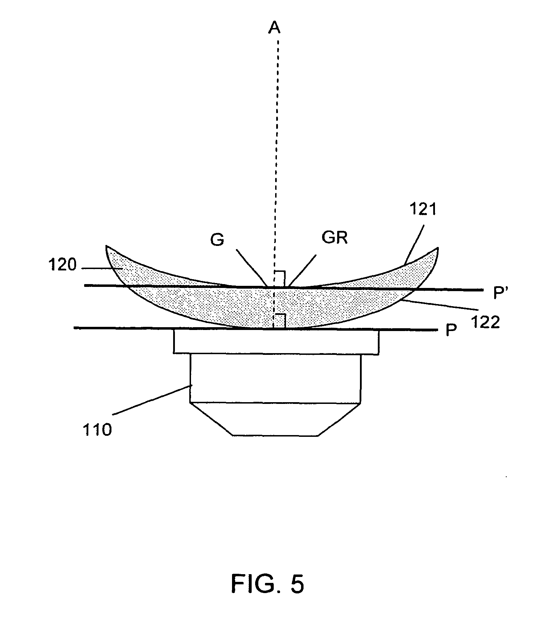

The geometrical barycentre point G thus calculated is employed by the controller 130, so that in a step S3 the lens member 120 is positioned on the blocking device 110 such that it may be rotated about a manufacturing axis of rotation A which passes through the geometrical barycentre region GR. Depending on the form of the surface 121 the geometrical barycentre point G may be located on the surface 121, or below or above the surface 121. With reference to Figure 5 in step S3, the orientation of the lens member 120 is adjusted so that a plane P' tangential to the first surface 121 of the lens member is orientated perpendicularly to the manufacturing axis of rotation A. The tangential plane P' is tangential to the first surface 121 at the point of intersection of the manufacturing axis of rotation A and the first surface 121. In order to respect the desired optical properties of the finished lens the tangential plane P' and a plane P tangential to the second opposing surface 122 at the point of intersection of the manufacturing axis of rotation A and the second surface 122, are orientated such that the angle between the two surfaces for obtaining the desired optical properties is respected and the two surfaces 121 and 122 define the desired compensation prism according to the optical lens prescription.

In step S4 of the method according to the embodiment of the invention, the lens member 120 is blocked in the desired position at the required position, orientation and inclination by the blocking device 110 by conventional methods known in the art. For example, the controller 130 may control the tool 150 with respect to the geometrical barycentre point of the first surface 121 of the lens member 120, the controller 130 may control the blocking device 110 so that the geometrical barycentre point of the first surface 121 of the lens member is orientated and positioned with respect of the tool 150. Alternatively, the blocking device 110 may be controlled automatically or manually by an operator using visual guiding technology or the like.

The lens member is rotated around the manufacturing axis of rotation A for one or more steps of the manufacturing process S5. During step S5 various surface manufacturing operations may be performed on the first surface 121 in order to produce a finished lens of the desired optical quality

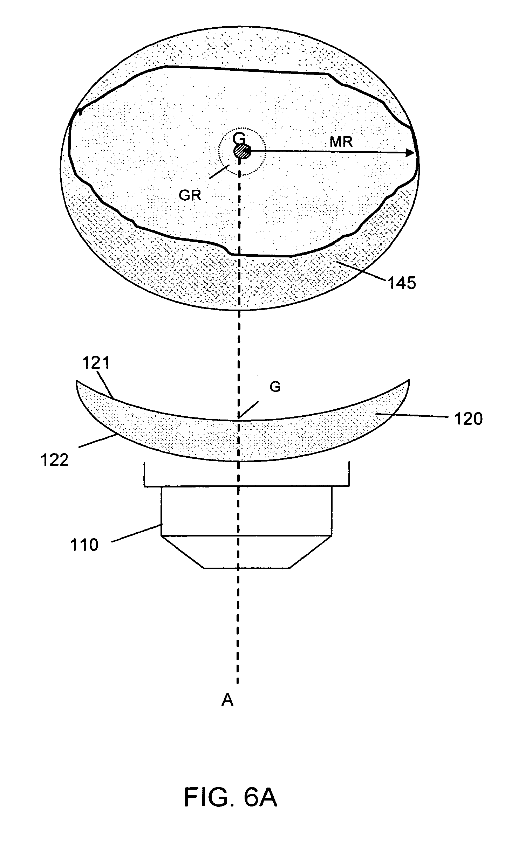

A manufacturing operation may involve machining the first surface 121 with a machining tool 150 as illustrated in Figure 6A in order to generate the required surface shape of the finished lens. The machining tool rubs against the surface 121 of the semi-finished lens member 120 moving across its surface to cover a machining surface area 145. Such machining tools are well known in the art and no further description of such a tool is required for the skilled person to understand its operation. An example of one such tool is one in which the relative rubbing of the tool and the surface 121 by means of abrasive material provides superficial removal of material on the optical surface 121 in order to modify the surface state. Another type of tool that may be employed to modify the surface is a cutting tool which removes material from the surface of the lens member. During this surfacing operation the tool is moved along a radial trajectory MR relative to the lens member 120 in order to sweep the whole of the optical surface 121 while the lens member 120 is rotating around the axis of rotation A.

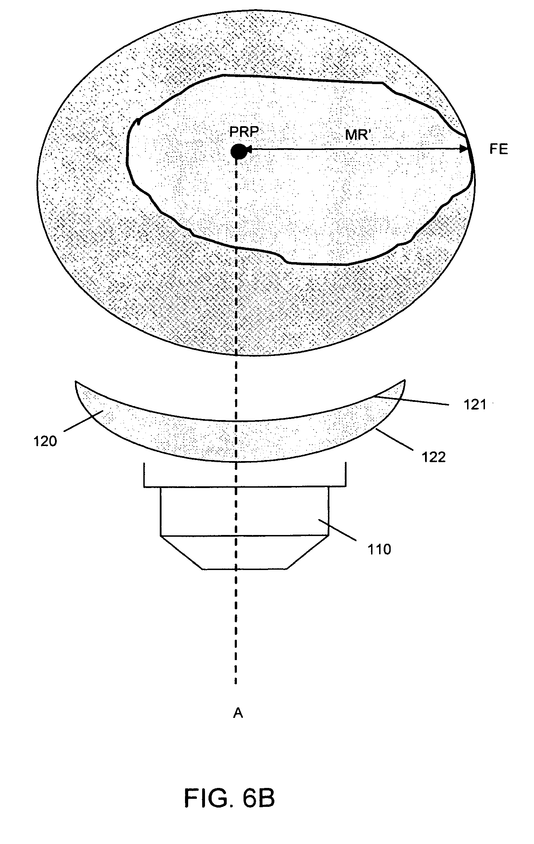

With reference to the system illustrated in Figure 6B, if the lens member is positioned to rotate around the prism reference point PRP of the first surface of the lens member, the radial trajectory MR' of the machining operation must be no less than the distance from the PRP to the farthest edge FE in order to ensure the entire surface of the lens member is machined. As a result an area larger than necessary is covered by the machining tool to machine the entire first surface 121 of the lens member. In comparison, with reference to Figure 6A since the manufacturing rotation axis is centered on the geometrical barycentre region, the method according to this embodiment of the invention provides the advantage that the total area 145 to be swept is reduced in contrast to the area covered in the method illustrated in Figure 6B, in which the machining axis corresponds to the PRP. This leads to less wearing of the machining tool and a reduction in the machining tool cycle time resulting in a more economical lens surfacing operation.

Further surfacing operations in which the method according to the embodiment of the invention may be implemented include smoothing or fining of the first surface, polishing of the first surface of the lens member, coating of the surface, edging of the lens member to provide the final shape of the lens, or any process of the lens manufacturing involving relative rotation between a tool and a lens member

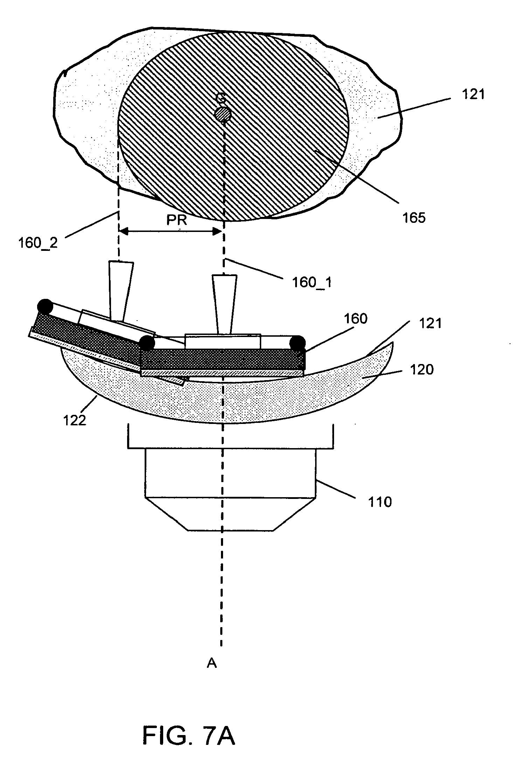

A polishing operation is illustrated in Figure 7A. Polishing of the surface 121 is performed to render the surface of the lens member 121 transparent. The operation involves spraying the tool and/or the optical surface 121 with a polish product. Such a polishing product may include, for example, a cerium or aluminium oxide base. The polishing tool 160 is moved along a radial trajectory PR from position 160_1 to 160_2 and vice versa while the lens member 120 is rotated around the manufacturing axis A enabling a polishing area 165 on the first surface 121 of the lens member 120 to be covered by the polishing tool 160.

The controller 130 can be programmed to control the operating parameters of the polishing tool according to the manufacturing axis of rotation A. For example, the sweep amplitude may be controlled according to the manufacturing axis of rotation. The sweep amplitude of the polishing tool 160 corresponds to the trajectory radius PR of the polishing tool 160.

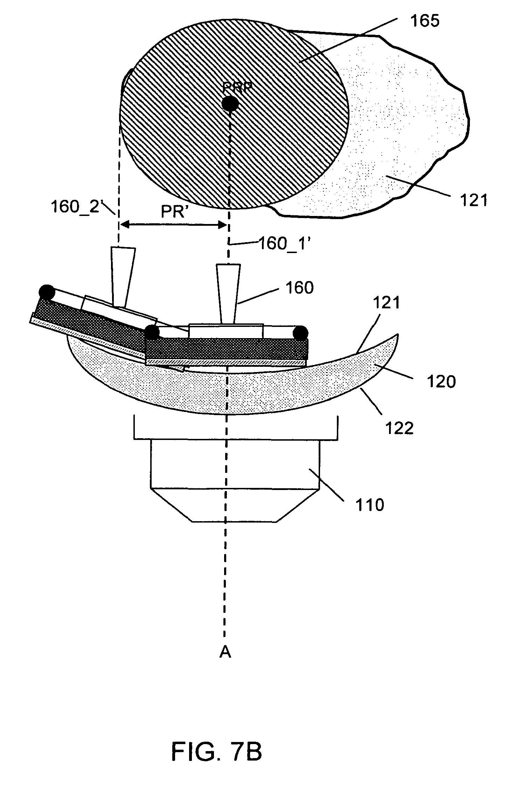

In this respect the method according to this embodiment of the invention provides the advantage that the polished surface area 165 is better centered on the optical surface 121 compared to a polishing method illustrated in Figure 7B in which the manufacturing axis of rotation corresponds to the prism reference point. In comparison the polishing over the active surface of the finished lens of the present embodiment of the invention is more uniform leading to an improved aesthetic quality and an improved functional optical quality.

The polishing process may be followed by a varnishing or coating procedure in which a layer of varnish is applied to the surface 121 in order to confer a polished surface state on the surface. The method according to an embodiment of the invention provides a more even, uniform coating of the lens surface 121 resulting in improved optical and aesthetic quality of the lens.

Although the present invention has been described hereinabove with reference to specific embodiments, the present invention is not limited to the specific embodiments, and modifications will be apparent to a skilled person in the art which lie within the scope of the present invention.

For instance, although in the foregoing embodiments of the invention the lens member is driven in rotation relative to the manufacturing tool, it will be appreciated that in alternative embodiments of the invention, the manufacturing tool may be driven in rotation about the manufacturing rotation axis with respect to the lens member. It will be further appreciated that both the lens member and the manufacturing tool may be driven in rotation. It will also be appreciated that the lens member may be driven in rotation with the blocking device 110 or may be rotated relative to the blocking device 110.

It will also be appreciated that the edge contour data may be manually input to the processor 130, or may be stored in a memory and communicated to the processor 130. It will further be appreciated that the geometrical barycentre may be previously calculated and be manually input to the controller 130 or automatically transferred from a memory storing the required geometrical barycentre data.

It will be appreciated that the method according to the embodiments of the invention, hereinbefore described may be implemented at any stage of the lens manufacture procedure, on a lens blank, uncut lens, semi-finished lens etc.

Although the optical surface being manufactured is illustrated in the drawings as being concave, the surface being manufactured may be convex or any suitably shaped optical surface for an ophthalmic lens.

While the foregoing examples have been described with reference to the manufacture of an ophthalmic lens, it will be appreciated that the method of the invention may be applied more generally to the manufacture of other types of optical lens, for example optical lens used in telescopes and the like.

Many further modifications and variations will suggest themselves to those versed in the art upon making reference to the foregoing illustrative embodiments, which are given by way of example only and which are not intended to limit the scope of the invention, that being determined solely by the appended claims.

**Claims**

1. A method of manufacturing an optical lens, the method comprising:

    providing edge contour data defining an edge contour of a first surface of a lens member;
    blocking the lens member with respect to a manufacturing axis of rotation;
    providing a relative rotation of the lens member with respect to a manufacturing tool about the manufacturing axis of rotation; and
    manufacturing a first surface of the lens member; **characterised in that**
    the manufacturing axis of rotation passes through a region of a geometrical barycentre point of the first surface of the lens member wherein the geometrical barycentre point is determined according to the edge contour data, and
    wherein the edge contour is defined by a plurality of points, each of the plurality of points being selected according to a desired minimum edge thickness of the lens member, and the region of the geometrical barycentre point is a circular region centered on the geometrical barycentre point and having a diameter of up to 6 mm.

2. A method according to claim 1, further comprising a step of calculating the geometrical barycentre point according to the edge contour data.

3. A method according to any preceding claim further comprising a step of polishing the first surface of the lens member with a polishing tool, the operating parameters of the polishing tool being determined as a function of the manufacturing axis of rotation.

4. A method according to claim 3 wherein the sweep amplitude of the polishing tool is determined according to the manufacturing axis of rotation.

5. A method according to any preceding claim, wherein the lens member is arranged such that a plane tangential to the first surface of the lens member is orientated perpendicularly to the manufacturing axis of rotation, the plane being tangential to the first surface at the point of intersection of the manufacturing axis of rotation and the first surface.

6. A method according to any preceding claim, wherein the optical surface of the first surface of the lens member and the optical surface of a second opposing surface of the lens member are orientated with respect to the manufacturing axis of rotation such that the desired optical properties of the lens member are respected.

7. A lens manufacturing apparatus for manufacturing an optical lens, the apparatus comprising
    a blocking device for blocking the lens member during manufacturing of the lens member such that a relative rotation of the lens member, with respect to a manufacturing tool, about a manufacturing axis of rotation, is provided wherein the manufacturing axis of rotation passes through the region of the geometrical barycentre and **characterised by**
    a processor for determining a geometrical barycentre point on a lens member according to edge contour data defining an edge contour of the first surface of the lens member;
    wherein the processor is operable to define the edge contour by a plurality of points, each of the plurality of points being selected according to a desired minimum edge thickness of the lens member, and the region of the geometrical barycentre point is a circular region centered on the geometrical barycentre point and having a diameter of up to 6 mm.

8. An apparatus according to claim 7, further comprising a polishing tool for polishing the first surface of the lens member, and wherein the polishing tool is arranged to determine the operating parameters of the polishing tool according to the manufacturing axis of rotation.

9. An apparatus according to claim 8, wherein the polishing tool is operable to determine the sweep amplitude of the polishing tool as a function of the manufacturing axis of rotation.

10. A computer program product for performing the method of any one of claims 1 to 6.

11. A computer-readable medium having computer-executable instructions to enable a computer system to perform the method of any one of claims 1 to 6.

**Patentansprüche**

1. Verfahren zur Herstellung einer optischen Linse, wobei das Verfahren aufweist:

    Bereitstellen von Kantenkonturdaten, die eine Kantenkontur einer ersten Oberfläche eines Linsenteils definieren;
    Blockieren des Linsenteils im Hinblick auf eine Herstellungsdrehachse;
    Sorgen für eine Relativdrehung des Linsenteils im Hinblick auf ein Herstellungswerkzeug um die Herstellungsdrehachse; und
    Herstellen einer ersten Oberfläche des Linsenteils;
    **dadurch gekennzeichnet, dass**
    die Herstellungsdrehachse einen Bereich eines geometrischen Schwerpunkts der ersten Oberfläche des Linsenteils durchläuft, wobei der geometrische Schwerpunkt gemäß den Kantenkonturdaten bestimmt wird, und

wobei die Kantenkontur durch mehrere Punkte definiert ist, wobei jeder der mehreren Punkte gemäß einer gewünschten minimalen Kantendicke des Linsenteils ausgewählt wird, und der Bereich des geometrischen Schwerpunkts ein kreisförmiger Bereich mit der Mitte auf dem geometrischen Schwerpunkt und mit einem Durchmesser von bis zu 6 mm ist.

2. Verfahren nach Anspruch 1, ferner mit einem Schritt des Berechnens des geometrischen Schwerpunkts gemäß den Kantenkonturdaten.

3. Verfahren nach einem der vorstehenden Ansprüche, ferner mit einem Schritt des Polierens der ersten Oberfläche des Linsenteils mit einem Polierwerkzeug, wobei die Betriebsparameter des Polierwerkzeugs als Funktion der Herstellungsdrehachse bestimmt werden.

4. Verfahren nach Anspruch 3, wobei die wobbelbreite des Polierwerkzeugs gemäß der Herstellungsdrehachse bestimmt wird.

5. Verfahren nach einem der vorstehenden Ansprüche, wobei das Linsenteil so angeordnet wird, dass eine Ebene tangential zur ersten Oberfläche des Linsenteils senkrecht zur Herstellungsdrehachse orientiert wird, wobei die Ebene am Schnittpunkt der Herstellungsdrehachse und der ersten Oberfläche tangential zur ersten Oberfläche ist.

6. Verfahren nach einem der vorstehenden Ansprüche, wobei die optische Oberfläche der ersten Oberfläche des Linsenteils und die optische Oberfläche einer zweiten Gegenfläche des Linsenteils im Hinblick auf die Herstellungsdrehachse so orientiert werden, dass die gewünschten optischen Eigenschaften des Linsenteils eingehalten werden.

7. Linsenherstellungsvorrichtung zur Herstellung einer optischen Linse, wobei die Vorrichtung aufweist:

eine Blockiervorrichtung zum Blockieren des Linsenteils während der Herstellung des Linsenteils, so dass für eine Relativdrehung des Linsenteils im Hinblick auf ein Herstellungswerkzeug um eine Herstellungsdrehachse gesorgt ist, wobei die Herstellungsdrehachse den Bereich des geometrischen Schwerpunkts durchläuft, und **gekennzeichnet durch**:

einen Prozessor zur Bestimmung eines geometrischen Schwerpunkts auf einem Linsenteil gemäß Kantenkonturdaten, die eine Kantenkontur der ersten Oberfläche des Linsenteils definieren;

wobei der Prozessor so betreibbar ist, dass er die Kantenkontur **durch** mehrere Punkte definiert, wobei jeder der mehreren Punkte gemäß einer gewünschten minimalen Kantendicke des Linsenteils ausgewählt ist, und der Bereich des geometrischen Schwerpunkts ein kreisförmiger Bereich mit der Mitte auf dem geometrischen Schwerpunkt und mit einem Durchmesser von bis zu 6 mm ist.

8. Vorrichtung nach Anspruch 7, ferner mit einem Polierwerkzeug zum Polieren der ersten Oberfläche des Linsenteils, und wobei das Polierwerkzeug so angeordnet ist, dass die Betriebsparameter des Polierwerkzeugs gemäß der Herstellungsdrehachse bestimmt sind.

9. Vorrichtung nach Anspruch 8, wobei das Polierwerkzeug so betreibbar ist, dass die wobbelbreite des Polierwerkzeugs als Funktion der Herstellungsdrehachse bestimmt ist.

10. Computerprogrammprodukt zur Durchführung des Verfahrens nach einem der Ansprüche 1 bis 6.

11. Computerlesbares Medium mit computerausführbaren Befehlen, damit ein Computersystem das Verfahren nach einem der Ansprüche 1 bis 6 durchführen kann.

**Revendications**

1. Procédé de fabrication d'une lentille optique, le procédé comprenant :

la fourniture de données de contour de bord définissant un contour de bord d'une première surface d'un élément lentille ;
le blocage de l'élément lentille par rapport à un axe de rotation de fabrication ;
la fourniture d'une rotation relative de l'élément lentille par rapport à un outil de fabrication autour de l'axe de rotation de fabrication ; et
la fabrication d'une première surface de l'élément lentille ;
**caractérisé en ce que** l'axe de rotation de fabrication passe à travers une région d'un point barycentrique géométrique de la première surface de l'élément lentille, dans lequel le point barycentrique géométrique est déterminé selon les données de contour de bord, et
dans lequel le contour de bord est défini par une pluralité de points, chacun parmi la pluralité de points étant sélectionné selon une épaisseur de bord minimum souhaitée de l'élément lentille, et la région du point barycentrique géométrique est une région circulaire centrée sur le point barycentrique géométrique et présentant un diamètre mesurant jusqu'à 6 mm.

2. Procédé selon la revendication 1, comprenant en outre une étape de calcul du point barycentrique géométrique selon les données de contour de bord.

3. Procédé selon une quelconque revendication précédente comprenant en outre une étape de polissage de la première surface de l'élément lentille avec un outil de polissage, les paramètres de fonctionnement de l'outil de polissage étant déterminés en fonction de l'axe de rotation de fabrication.

4. Procédé selon la revendication 3, dans lequel l'amplitude de balayage de l'outil de polissage est déterminée selon l'axe de rotation de fabrication.

5. Procédé selon une quelconque revendication précédente, dans lequel l'élément lentille est agencé de sorte qu'un plan tangentiel à la première surface de l'élément lentille soit orienté perpendiculairement à l'axe de rotation de fabrication, le plan étant tangentiel à la première surface au point d'intersection de l'axe de rotation de fabrication et de la première surface.

6. Procédé selon une quelconque revendication précédente, dans lequel la surface optique de la première surface de l'élément lentille et la surface optique d'une seconde surface opposée de l'élément lentille sont orientées par rapport à l'axe de rotation de fabrication de sorte que les propriétés optiques souhaitées de l'élément lentille soient respectées.

7. Appareil de fabrication de lentille pour fabriquer une lentille optique, l'appareil comprenant :

un dispositif de blocage pour bloquer l'élément lentille durant la fabrication de l'élément lentille de sorte qu'une rotation relative de l'élément lentille, par rapport à un outil de fabrication, autour d'un axe de rotation de fabrication, soit fournie, dans lequel l'axe de rotation de fabrication passe à travers la région du barycentre géométrique, et **caractérisé par** un processeur pour déterminer un point barycentrique géométrique sur un élément lentille selon des données de contour de bord définissant un contour de bord de la première surface de l'élément lentille ; dans lequel le processeur est utilisable pour définir le contour de bord par une pluralité de points, chacun parmi la pluralité de points étant sélectionné selon une épaisseur de bord minimum souhaitée de l'élément lentille, et la région du point barycentrique géométrique est une région circulaire centrée sur le point barycentrique géométrique et présentant un diamètre mesurant jusqu'à 6 mm.

8. Appareil selon la revendication 7, comprenant en outre un outil de polissage pour polir la première surface de l'élément lentille, et dans lequel l'outil de polissage est agencé pour déterminer les paramètres de fonctionnement de l'outil de polissage selon l'axe de rotation de fabrication.

9. Appareil selon la revendication 8, dans lequel l'outil de polissage est utilisable pour déterminer l'amplitude de balayage de l'outil de polissage en fonction de l'axe de rotation de fabrication.

10. Produit programme d'ordinateur pour réaliser le procédé selon l'une quelconque des revendications 1 à 6

11. Support lisible par ordinateur comportant des instructions exécutables par ordinateur pour permettre à un système d'ordinateur de réaliser le procédé selon l'une quelconque des revendications 1 à 6.

FIG. 1

FIG. 2

DETERMINE EDGE CONTOUR — S1

CALCULATE GEOMETRICAL BARYCENTRE — S2

POSITION AND ADJUST LENS MEMBER — S3

BLOCK LENS MEMBER — S4

S5

MANUFACTURE SURFACE OF LENS MEMBER

FIG. 3

FIG. 4A

FIG. 4B

FIG. 4C

FIG. 5

FIG. 6A

FIG. 6B

FIG. 7A

FIG. 7B

**EP 2 184 132 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6012965 A
- EP 1855838 A